Europäisches Patentamt

European Patent Office

Office européen des brevets

(19)

(11) Veröffentlichungsnummer : **0 127 610**
**B1**

# (12) EUROPÄISCHE PATENTSCHRIFT

(45) Veröffentlichungstag der Patentschrift :
27.07.88

(21) Anmeldenummer : 84890094.0

(22) Anmeldetag : 23.05.84

(51) Int. Cl.⁴ : **A 22 C 17/04**

(54) **Vorrichtung zur Abtrennung des Fleiches von Knochen.**

(30) Priorität : 27.05.83 AT 1956/83

(43) Veröffentlichungstag der Anmeldung :
05.12.84 Patentblatt 84/49

(45) Bekanntmachung des Hinweises auf die Patenterteilung : 27.07.88 Patentblatt 88/30

(84) Benannte Vertragsstaaten :
DE FR GB

(56) Entgegenhaltungen :
CH-A- 369 378
DE-A- 2 901 909
FR-A- 2 356 375
GB-A- 1 563 750

(73) Patentinhaber : Inject Star Pökelmaschinen Gesellschaft m.b.H.
Innstrasse 23-25
A-1200 Wien (AT)

(72) Erfinder : Prosenbauer, Otto
Innstrasse 23
A-1201 Wien (AT)

(74) Vertreter : Boeckmann, Peter, Dipl.Ing. et al
Strohgasse 10
A-1030 Wien (AT)

## Beschreibung

Die Erfindung bezieht sich auf eine Vorrichtung zur Abtrennung des Fleisches von Knochen, insbesondere für Geflügel oder Geflügelteile, wie ganze Hühner oder Puten bzw. Hühner- und Putenteile, durch Verpressen der in den zylindrischen Preßraum einer Presse zwischen einem Preßkolben und einem Gegenkolben eingebrachten Fleisch-Knochen-Masse, wobei in der Wand des Preßraumes Durchgangsöffnungen vorgesehen sind, durch welche das durch den Preßdruck in den pastenartigen Zustand übergeführte Fleisch hindurchtreten kann, wogegen die Knochen zurückgehalten werden, und wobei beide Kolben zylindrische Abschnitte haben und in Achsrichtung des Preßraumes in diesem verschiebbar sind, von welchen Kolben einer bei seiner Rückzugbewegung eine Austragsöffnung für die Abfuhr der verpreßten Knochen aus dem Preßraum freigibt, und einer der Kolben mit einer Abriebkante für die Durchgangsöffnungen versehen ist.

Solche Vorrichtungen sind bekannt (DE-A-2 901 909). Bei ähnlichen Vorrichtungen treten bei der Abtrennung des an Knochen anhaftenden Fleisches bei hohen Fleischanteilen, insbesondere bei Hühnern, Probleme hinsichtlich einer ungenügenden Ausbeute und Funktionsstörungen auf. Es hat sich gezeigt, daß z. B. bei der Verpressung von ganzen Hühnern die Haut die Filteröffnungen der Presse verlegt, wodurch die Ausbeute bis zur Funktionsstörung sinkt. Die bekannte Vorrichtung versucht, diesem Nachteil dadurch entgegenzuwirken, daß der Gegenkolben mit einer gegen den Preßkolben zu gerichteten Spitze ausgebildet ist, da anzunehmen war, daß dadurch der in radialer Richtung des Preßraumes auf das Preßgut wirkende Druck erhöht würde. Es hat sich aber gezeigt, daß das Filter häufig dennoch verlegt bleibt und daß in der Grenzlage der beiden Kolben, in welchen diese beiden Kolben einander am meisten genähert sind, zwischen der kegelförmigen Spitze des Gegenkolbens und dem Preßkolben ein Totraum verbleibt, der nicht völlig beherrscht werden kann.

Die Erfindung geht von der Erkenntnis aus, daß für diese Funktionsstörungen und Probleme einerseits die bei den bekannten Pressen verwendeten Ringscheibenfilter verantwortlich sind, anderseits eine mangelnde Bewegung des Preßgutes. Die Erfindung bezweckt, die geschilderten Nachteile zu vermeiden und Funktionsstörungen der Maschine zu vermeiden, zugleich aber deren Wirkungsgrad zu verbessern, so daß im Vergleich zu bekannten Vorrichtungen höhere Fleischanteile erzielbar sind. Die Erfindung löst diese Aufgabe dadurch, daß beide Kolben stumpfe Stirnflächen haben, deren in radialer Richtung des Preßraumes gemessene Abmessungen geringer sind als jene des Preßraumes, so daß jede Stirnfläche durch einen Ringspalt von der Wand des Preßraumes getrennt ist, und daß zumindest eine Abriebkante des Preßkolbens und/oder des Gegenkolbens über die mit im wesentlichen Kreisbogenquerschnitt ausgebildeten, ein Lochfilter bildender Durchgangsöffnungen streicht. Durch die stumpfen Stirnflächen der beiden Kolben wird der eingangs erwähnte Totraum vermieden und es können beide Kolben einander während der Verpressung des Preßgutes so weit genähert werden, daß nur ein sehr kleines Paket an verpreßten Knochen zwischen den beiden Kolben verbleibt. Durch die den erwähnten Ringspalt abschließende Abriebkante werden die vom Lochfilter gebildeten Öffnungen laufend freigescheuert, welcher Effekt zusätzlich zu dem Reinigungseffekt auftritt, den die unter Druck in Längsrichtung des Preßraumes entlang der Lochfilteröffnungen verschobene Knochenmasse ausübt. Überraschender Weise hat sich gezeigt, daß dieser zusätzliche Reinigungseffekt nur bei Lochfiltern auftritt, das sind Filter mit zylindrischer Innenwand, die von Durchlaßöffnungen durchsetzt sind, deren Querschnitt zumindest im wesentlichen kreisförmig ist. Die bisher fast stets verwendeten Ringfilter, bei denen die Durchlaßöffnungen von Spalten zwischen je zwei benachbarten Ringen gebildet sind, werden hingegen durch Hautanteile des Preßgutes verlegt und können auch durch die Wirkung einer Abriebkante nicht mehr verläßlich freigelegt werden. Außerdem wird beim Erfindungsgegenstand die Wirkung der Abriebkante durch den vor ihr liegenden Ringraum verstärkt, in welchem sich das Preßgut sammeln kann.

Aus der GB-A-1 563 750 ist es bekannt, einen Preßkolben, der an seinem Stirnende stumpf bombiert ausgebildet ist, mit diesem Stirnende über die Durchgangsöffnungen eines die Preßraumwand bildenden Lochfilters streichen zu lassen, wobei der Preßraum durch ein bombiert ausgebildetes, den Preßdruck aufnehmendes Widerlager abgeschlossen ist. Hiebei tritt aber, wie festgestellt werden konnte, ein Abriebeffekt nicht oder nur unwesentlich auf. Dies ist darauf zurückzuführen, daß sich bei dieser bekannten Konstruktion die stumpfe Kolbenstirnfläche über den gesamten Querschnitt des Preßraumes erstreckt, so daß die Abriebkante nicht richtig wirksam werden kann.

Beim Betrieb der erfindungsgemäßen Vorrichtung ist es zweckmäßig, ein Paket verpreßter Masse unter Druck an den Lochfilteröffnungen in Richtung zur Austragsöffnung zu bewegen, vorzugsweise mehrmals. Dadurch werden die Lochfilteröffnungen gereinigt und zugleich erreicht, daß stets neue Lochfilteröffnungen, die nicht verlegt sind, der zu verpressenden Masse zur Verfügung stehen. Dadurch ergibt sich im Vergleich zu bekannten Anlagen eine größere Ausbeute und eine wesentlich verbesserte Funktionssicherheit.

Es läßt sich in vorteilhafter Weise die erfindungsgemäße Vorrichtung auch so betreiben, daß in den Preßraum bei vorgeschobenem Gegenkolben eine Menge an zu verpressender Masse eingebracht und durch Verschieben des Preßkolbens verpreßt wird, daß sodann nach Rückzug des Preßkolbens neue zu verpressende Masse in den Preßraum eingebracht und zusammen mit dem Rückstand der zuvor verpreßten Masse verpreßt wird, wobei spätestens während dieser Verpressung der Gegenkolben etwas zurückgezogen wird, wonach gegebenenfalls diese Vorgänge ein oder mehrmals wiederholt werden, wobei der Gegenkolben spätestens während jedes Hubes des Preßkolbens ein Stück weiter zurückgezogen wird und daß schließlich beide Kolben bei Druck auf die zu verpressende Masse in Richtung zur Austragsöffnung bis zu deren Freigabe verschoben werden. Zum Unterschied von den bekannten Verfahren wird also nicht eine in den Preßraum eingebrachte Charge so verarbeitet, daß diese Charge ausgepreßt und ihr Rückstand beseitigt wird, bevor die nächstfolgende Charge in den Preßraum eingebracht wird, sondern es werden im Preßraum nach und nach mehrere Chargen bzw. deren Rückstände gesammelt. Dadurch gelingt es, die Rückstände der zuerst eingebrachten Chargen so weitgehend vom Fleisch zu befreien, daß in den Knochenrückständen dieser Chargen praktisch keine Fleischanteile mehr vorhanden sind. Die trockene Rückstandsmasse wird aber unter Druck entlang der Lochfilteröffnungen geführt und reibt dadurch die Lochfilteröffnungen frei. Selbst wenn also gewisse Anteile der zu verpressenden Masse schon praktisch fleischfrei sind, so sind diese Anteile dennoch nicht wirkungslos, da sie zur Freischabung bzw. Freilegung der Lochfilterdurchlaßöffnungen beitragen.

Vorzugsweise sind im Rahmen der Erfindung beide Kolben mit geringfügig bombierten Stirnflächen versehen, was das Ablösen der Knochenrückstandsmasse erleichtert.

Vorzugsweise ist erfindungsgemäß die Anordnung so getroffen, daß sich der Hub zumindest eines mit einer Abriebkante versehenen Kolbens über die gesamten Öffnungen des Lochfilters erstreckt, um die erwähnte Reinigungswirkung auf alle Lochfilteröffnungen wirksam zu machen. Besonders günstig ist es, wenn sich die Hübe der beiden Kolben zumindest im Bereich des Lochfilters überlappen, da dann das Preßgut und die Abriebkanten am besten auf die Lochfilteröffnungen einwirken.

Vorzugsweise besteht im Rahmen der Erfindung das Lochfilter aus einem dünnwandigen Mantel, der von als Rundlöcher ausgebildeten Durchgangsöffnungen durchsetzt ist, welche mit ihren Achsen in mehreren, in Richtung der Lochfilterachse gegeneinander versetzten Kreisen angeordnet sind, deren jeder konzentrisch zur Lochfilterachse liegt, wobei zwischen je zwei solcher Kreise am Außenmantel des Lochfilters eine umlaufende Verstärkungsrippe angeordnet ist. Dies hat seinen Grund darin, daß die Lochfilteröffnungen zumeist sehr kleinen Durchmesser haben, der vorzugsweise im Bereich zwischen 1,2 und 2 mm liegt. Löcher mit einem Durchmesser von etwa 1,5 mm lassen sich in starkwandiges Material nicht mehr verläßlich bzw. rationell bohren.

Man muß daher auf dünnwandiges Mantelmaterial für das Lochfilter zurückgreifen, wodurch aber wiederum die Gefahr entsteht, daß der dünnwandige Lochfiltermantel dem auftretenden Preßdruck nicht mehr gewachsen ist. Dieser Gefahr wird durch die Verstärkungsrippen im Sinne der Erfindung begegnet. Es ist hiebei zweckmäßig, das Lochfilter einstückig auszubilden, obwohl auch eine Zusammensetzung aus entsprechend profilierten Ringen möglich wäre.

Um die Vorrichtung nicht nur für die Verpressung von Hühnerfleisch anwenden zu können, sondern auch für die Verpressung von fleischbehafteten Schweine- oder Rinderknochen, empfiehlt es sich im Rahmen der Erfindung, daß die stumpfe Stirnfläche des Gegenkolbens von einer demontierbaren Verlängerung getragen ist, so daß diese stumpfe Stirnfläche gegen einen eine spitze Stirnfläche tragenden Bauteil auswechselbar ist. Analog dazu ist für den Preßkolben die Anordnung in einem solchen Fall so zu treffen, daß die stumpfe Stirnfläche des Kolbens von einer demontierbaren Verlängerung getragen ist. Dadurch gelingt es mit geringem Aufwand an Zeit und Material, die Vorrichtung auf die Art der jeweils zu verpressenden Masse umzurüsten.

Die Abriebkante kann von der Mantelfläche des Kolbens selbst gebildet sein, es ist jedoch vorzuziehen, daß zumindest eine Abriebkante von einer über die Stirnfläche radial vorstehenden Hülse, vorzugsweise aus Kunststoff, gebildet ist. Geeignete lebensmittelechte Kunststoffe sind bekannt, z. B. Polyamid, Polyurethan usw.

In der Zeichnung ist ein Ausführungsbeispiel der Erfindung schematisch veranschaulicht. Fig. 1 zeigt einen Vertikalschnitt durch die Vorrichtung, Fig. 2 zeigt eine Ansicht, teilweise im Schnitt, eines Lochfilters. Fig. 3 ist ein Axialschnitt in größerem Maßstab durch die beiden Kolben. Fig. 4 zeigt den Aufbau des Preßkolbens sowie seine mögliche Umrüstung in Explosionsansicht. Fig. 5 zeigt den Aufbau des Gegenkolbens bzw. seine Umrüstung in Explosionsansicht.

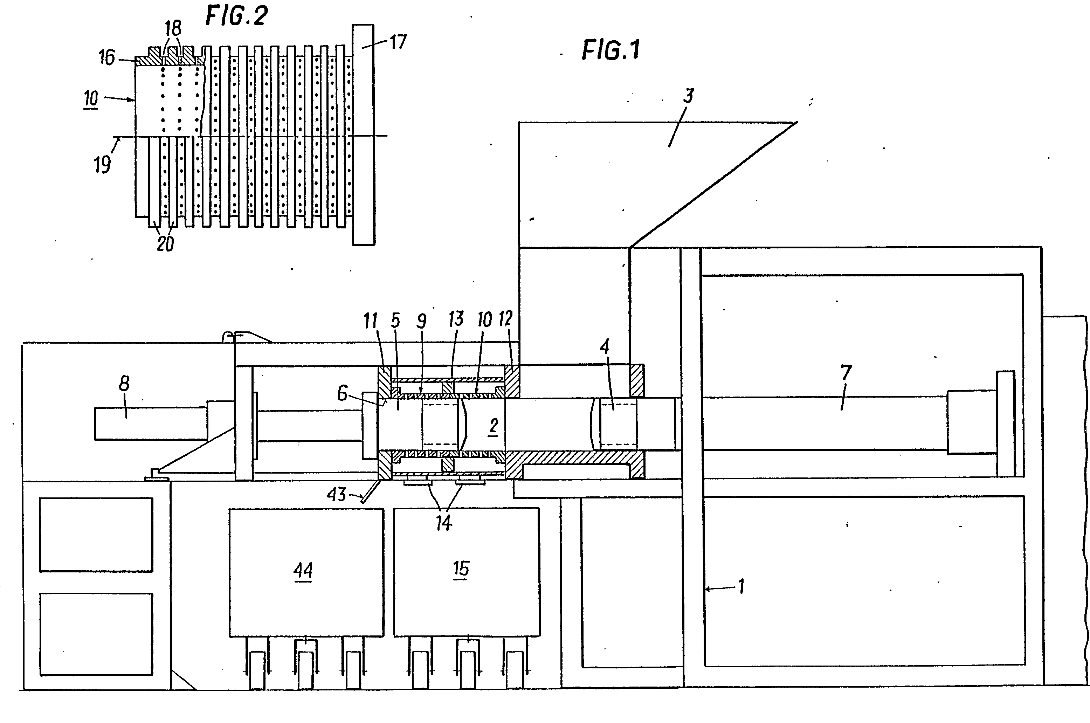

Die Vorrichtung nach Fig. 1 hat ein Gestell 1, in welchem ein Preßraum 2 mit horizontaler Achse angeordnet ist, in den die zu verpressende Fleisch-Knochen-Masse durch einen Einfülltrichter 3 eingebracht werden kann. Im Preßraum 2 sind ein Preßkolben 4 und ein Gegenkolben 5 passend geführt, die den Preßraum 2 an seinen beiden Stirnseiten abschließen. In seiner völlig zurückgezogenen Stellung gibt der Gegenkolben 5 eine Austragsöffnung 6 für die verpreßten Knochen frei, durch die das verpreßte Knochenpaket vom Preßkolben 4 ausgeschoben wird. Die beiden Kolben 4, 5 werden von Druckmittelzylindern 7 bzw. 8, zweckmäßig hydraulisch, betätigt, die im Gestell 1 befestigt sind. In seiner völlig zurückgezogenen Stellung gibt der Preßkolben 4 die vom Einfülltrichter 3 in den Preßraum 2 führende Öffnung so weit frei, daß die in den Einfülltrichter 3 eingebrachte zu verpressende Masse in den Preßraum 2 ungehindert gelangen kann. Die Wand des Preßraumes 2 ist von zwei hintereinandergeschalteten Lochfiltern 9, 10 gebildet, die

zwischen zwei ortsfesten Wänden 11, 12 des Gestelles 1 gehalten sind. Das eine Lochfilter 10 ist in Fig. 2 in größerem Maßstab dargestellt. Die beiden Lochfilter 9, 10 sind von einem Auffangzylinder 13 für das durch den Preßdruck in den pastenartigen Zustand übergeführte Fleisch umgeben, der von Anschlußstutzen 14 für den Anschluß nicht dargestellter Schläuche durchsetzt ist, mit denen das Fleisch in einen Behälter, z. B. einen Transportwagen 15, geleitet werden kann.

Das Lochfilter 10 (Fig. 2) ist einstückig ausgebildet und hat einen verhältnismäßig dünnwandigen Mantel 16, der an einem Stirnende des Lochfilters 10 in einen Befestigungsflansch 17 übergeht. Der Mantel 16 ist von einer Vielzahl von Durchgangsöffnungen 18 durchsetzt, die vom in den pastenartigen Zustand durchsetzten Fleisch passiert werden können, die Knochen jedoch zurückhalten. Jede Durchgangsöffnung 18 ist von einer Bohrung des Mantels 16 gebildet, die einen Durchmesser im Bereich von etwa 1,2 bis etwa 2,0 mm hat, vorzugsweise etwa 1,5 mm. Die Durchgangsöffnungen 18 sind in mehreren Kreisen konzentrisch zur Achse 19 des Lochfilters 10 angeordnet, welche Kreise voneinander gleiche Abstände haben.

Entlang jedes Kreises sind die Durchgangsöffnungen 18 in gleichen Abständen voneinander verteilt angeordnet. Zwischen je zwei solcher Kreise liegt an der Außenfläche des Mantels 16 eine umlaufende Rippe 20, die den Mantel zur Aufnahme des im Preßraum 2 ausgeübten Preßdruckes verstärkt. Auf diese Weise wird dem einstückigen Lochfilter 10 die nötige Festigkeit gegeben.

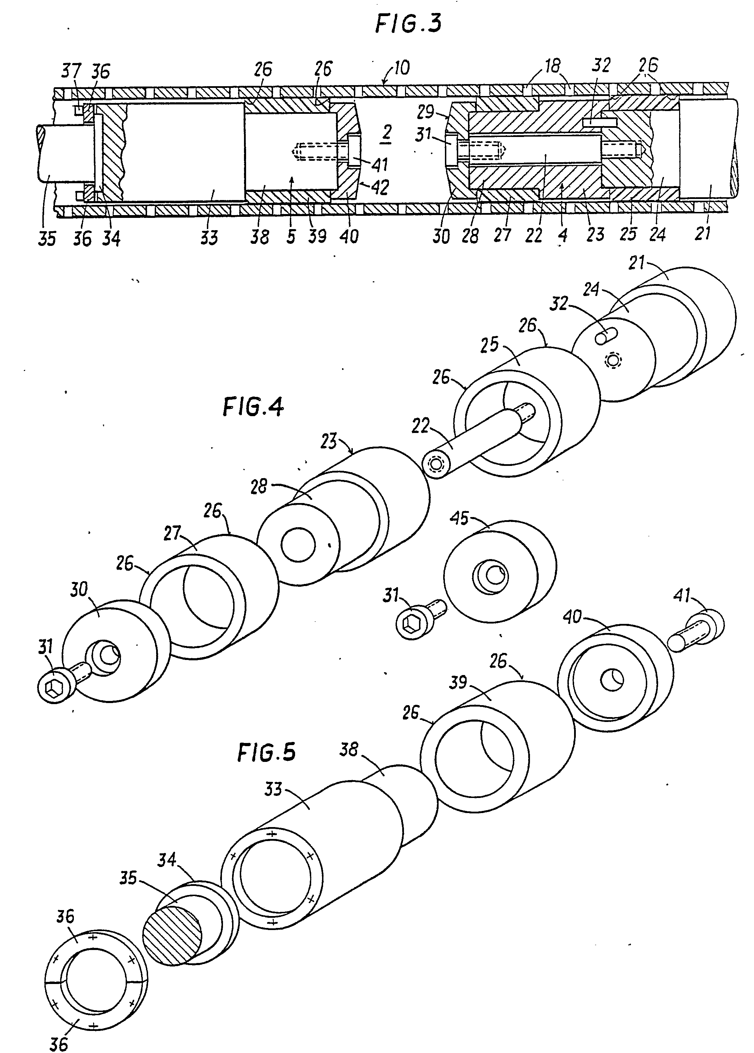

In Fig. 3 sind die mit dem Lochfilter 10 zusammenarbeitenden Kolben, nämlich der Preßkolben 4 und der Gegenkolben 5, in größerem Maßstab dargestellt. Das Lochfilter ist hiebei nur schematisch angedeutet, seine Rippen 20 sind der besseren Übersichtlichkeit halber fortgelassen.

Die Preßkolben 4 ist an seiner Kolbenstange 21 mittels eines Verlängerungsbolzens 22 befestigt, der in eine Gewindebohrung am vorderen Stirnende der Kolbenstange 21 eingeschraubt ist. Auf diesen Verlängerungsbolzen 22 ist ein Verlängerungsstück 23 aufgesetzt, wobei zwischen diesem und der Kolbenstange 21 entlang einer stufenförmigen Absetzung 24 des Kolbenstangenendes eine Hülse 25 aus Kunststoff sitzt, die mit ihren beiden Stirnrändern Abriebkanten 26 bildet, die die Durchgangsöffnungen 18 bei jedem Hub des Preßkolbens 4 putzen. Eine analog ausgebildete Hülse 27 ist auf einer stufenförmigen Absetzung 28 des Verlängerungsstückes 23 angeordnet und wird durch eine die vordere, geringfügig bombiert ausgebildete Stirnfläche 29 des Preßkolbens 4 bildende Preßplatte 30 gehalten, die mittels einer mittigen, versenkten Schraube 31 am Verlängerungsbolzen 22 festgeschraubt ist. Die beiden Hülsen 25, 27 bilden hiebei die Führung des Preßkolbens 4 an der vom Lochfilter 10 gebildeten Wand des Preßraumes 2. Die den Preßkolben 4 aufbauenden Bauteile sind in Fig. 4 in auseinandergezogenem Zustand dargestellt. Ein Paßstift 32 der Kolbenstange 21 verhindert, daß sich das Verlängerungsstück 23 gegenüber der Kolbenstange 21 drehen kann.

Der Gegenkolben 5 hat ebenfalls ein Verlängerungsstück 33, das einen Flansch 34 der Kolbenstange 35 umgreift und dort mittels zweier Halbschalen 36 mit Schrauben 37 befestigt ist. Das Verlängerungsstück 33 trägt auf einer Absetzung 38 eine Hülse 39 aus Kunststoff, die zugleich eine Führung für den Gegenkolben 5 an der Wand des Preßraumes 2 und zwei Abreibkanten 26 für die Durchgangsöffnungen 18 des Lochfilters 10 bildet. Die Hülse 39 ist am Stirnende des Gegenkolbens 5 mittels einer Preßplatte 40 gehalten, die mit einer versenkten Schraube 41 am Stirnende des Verlängerungsstückes 33 festgeschraubt ist. Die Stirnfläche 42 der Preßplatte 40 ist geringfügig bombiert ausgebildet, um die Ablösung des Preßkuchens der verpreßten Knochen zu erleichtern.

Wie ersichtlich, ragen die Hülsen 25, 27, 39 in radialer Richtung etwas über den Umfang der Preßplatten 30, 40 hinaus, um die Abriebkanten 26 wirksamer werden zu lassen.

Im Betrieb wird zweckmäßig so vorgegangen, daß beide Kolben 4, 5 zunächst in die (in Fig. 1 gesehen) am weitesten rechts befindliche Stellung gebracht werden. Sodann wird eine Charge an zu verpressender Masse durch den Einfülltrichter 3 in den Preßraum 2 eingebracht und der Preßkolben 4 vorgeschoben. Es beginnt die Auspressung des Fleisches durch das dem Trichter benachbarte Lochfilter 9, dessen Durchgangsöffnungen 18 zweckmäßig etwas größer sind als jene des Lochfilters 10. Günstige Werte haben sich für das Lochfilter 9 in einem Durchmesserbereich zwischen etwa 1,5 und 2,0 mm gezeigt, für das Lochfilter 10 zwischen etwa 1,2 und 1,5 mm. Nach Verpressung der ersten Charge wird der Preßkolben 4 zurückgezogen und eine neue Charge in den Preßraum 2 eingebracht, die sodann zusammen mit dem Rückstand der ersten Charge verpreßt wird. Hiebei wird der Gegenkolben 5 etwas zurückgezogen, so daß neue Durchgangsöffnungen 18 freigegeben werden. Zugleich werden durch die beschriebene Rückzugsbewegung und Vorschubbewegung des Preßkolbens 4 die Durchgangsöffnungen 18 zumindest teilweise gereinigt. Nach Rückzug des Preßkolbens 4 wird eine weitere Charge in den Preßraum 2 eingebracht und es wird erneut verpreßt, wobei der Gegenkolben 5 wieder um ein Stück zurückgezogen wird. Diese Vorgänge können sich mehrmals wiederholen, bis schließlich der verbleibende Preßrückstand durch die Austragsöffnung 6 ausgeschoben wird. Dies geschieht dadurch, daß die Kolben 4, 5 in der gleichen Richtung gegen die Austragsöffnung 6 zu bewegt werden, bis der Kolben 5 diese Öffnung 6 freigibt. Bei dieser Bewegung der beiden Kolben 4, 5 in der gleichen Richtung wird jedoch der Preßdruck aufrechterhalten, so daß also auch während dieser abschließenden Bewegung des Preßkuchens in Richtung zur Austragsöffnung 6 noch eine Verpressung und somit eine Gewinnung restlicher Fleischmasse stattfindet. Die durch die Austragsöffnung 6 ausgeworfenen verpreßten Knochenrückstände fallen über eine Rutsche 43 in einen weiteren Transportwagen 44.

Eine Ausführungsvariante hiezu besteht darin, daß für jede Charge der Gegenkolben 5 bei der Verpressung dieser Charge auch in Richtung zum Einfülltrichter 3 bewegt wird, so daß also eine Verpressung jeder Charge bei gleichzeitiger Bewegung beider Kolben in beiden Richtungen erfolgt. Dies begünstigt die Freischabung der Durchgangsöffnungen.

Wie sich aus den Fig. 4 und 5 ergibt, ist es leicht möglich, die Vorrichtung auf die Verpressung von Schweine- oder Rinderknochen umzurüsten. Hiezu ist es lediglich nötig, für den Preßkolben (Fig. 4) die Bauteile 22, 23, 27 und gegebenenfalls 30 zu demontieren und eine andere Preßplatte 45 oder gegebenenfalls auch die Preßplatte 30 an der vorderen Stirnfläche der Kolbenstange 21 zu befestigen. Für den Gegenkolben (Fig. 5) brauchen nur die Bauteile 33, 39 und 40 demontiert zu werden.

## Patentansprüche

1. Vorrichtung zur Abtrennung des Fleisches von Knochen, insbesondere für Geflügel oder Geflügelteile, wie ganze Hühner oder Puten bzw. Hühner- oder Putenteile, durch Verpressen der in den zylindrischen Preßraum (2) einer Presse zwischen einem Preßkolben (4) und einem Gegenkolben (5) eingebrachten Fleisch-Knochen-Masse, wobei in der Wand des Preßraumes (2) Durchgangsöffnungen (18) vorgesehen sind, durch welche das durch den Preßdruck in den pastenartigen Zustand übergeführte Fleisch hindurchtreten kann, wogegen die Knochen zurückgehalten werden, und wobei beide Kolben (4, 5) zylindrische Abschnitte haben und in Achsrichtung des Preßraumes (2) in diesem verschiebbar sind, von welchen Kolben einer bei einer Rückzugsbewegung eine Austragsöffnung (6) für die Abfuhr der verpreßten Knochen aus dem Preßraum (2) freigibt, und einer der Kolben (4, 5) mit einer Abriebkante (26) für die Durchgangsöffnungen (18) versehen ist, dadurch gekennzeichnet, daß beide Kolben (4, 5) stumpfe Stirnflächen (29, 42) haben, deren in radialer Richtung des Preßraumes (2) gemessene Abmessungen geringer sind als als jene des Preßraumes (2), so daß jede Stirnfläche (29, 42) durch einen Ringspalt von der Wand des Preßraumes (2) getrennt ist, und daß zumindest eine Abriebkante (26) des Preßkolbens (4) und/ oder des Gegenkolbens (5) über die mit im wesentlichen Kreisquerschnitt ausgebildeten, ein Lochfilter (9, 10) bildenden Durchgangsöffnungen (18) streicht.

2. Vorrichtung nach Anspruch 1, dadurch gekennzeichnet, daß beide Kolben (4, 5) geringfügig bombierte Stirnflächen (29, 42) haben.

3. Vorrichtung nach Anspruch 1 oder 2, dadurch gekennzeichnet, daß sich der Hub zumindest eines mit einer Abriebkante (26) versehenen Kolbens (4, 5) über die gesamten Durchgangsöffnungen (19) des Lochfilters (9, 10) erstreckt.

4. Vorrichtung nach Anspruch 1, 2 oder 3, dadurch gekennzeichnet, daß sich die Hübe der beiden Kolben (4, 5) zumindest im Bereich des Lochfilters (9, 10) überlappen.

5. Vorrichtung nach einem der Ansprüche 1 bis 4, dadurch gekennzeichnet, daß die Stirnfläche (42) des Gegenkolbens (5) von einer demontierbaren Verlängerung (33) getragen ist.

6. Vorrichtung nach einem der Ansprüche 1 bis 5, dadurch gekennzeichnet, daß die stumpfe Stirnfläche (29) des Preßkolbens (4) von einem demontierbaren Verlängerungsstück (23) getragen ist.

7. Vorrichtung nach einem der Ansprüche 1 bis 6, dadurch gekennzeichnet, daß zumindest eine Abriebkante (26) von einer über die Stirnfläche (29 bzw. 42) des Kolbens (4, 5) radial vorstehenden Hülse (25, 27, 39), vorzugsweise aus Kunststoff, gebildet ist.

8. Vorrichtung nach einem der Ansprüche 1 bis 7, dadurch gekennzeichnet, daß zumindest ein Lochfilter (9, 10) aus einem dünnwandigen Mantel (16) besteht, der von als Rundlöcher ausgebildeten Durchgangsöffnungen (18) durchsetzt ist, welche mit ihren Achsen in mehreren, in Richtung der Lochfilterachse gegeneinander versetzten Kreisen angeordnet sind, deren jeder konzentrisch zur Lochfilterachse (19) liegt, wobei zwischen je zwei solchen Kreisen an der Außenfläche des Mantels (16) eine umlaufende Verstärkungsrippe (20) angeordnet ist.

9. Vorrichtung nach Anspruch 8, dadurch gekennzeichnet, daß das Lochfilter (9, 10) einstückig ist.

## Claims

1. An apparatus for separating meat from bones, in particular for poultry or poultry parts such as whole chickens or turkeys or parts of chickens or turkeys, by compressing the meat/bone mass introduced into the cylindrical pressure chamber (2) of a press between a pressing piston (4) and a counter piston (5), penetration openings (18) being provided in the wall of the pressure chamber (2), through which openings the meat transformed into a paste-like condition by the pressure can penetrate, whereas the bones are retained, and wherein both pistons (4, 5) have cylindrical portions and are moveable in the pressure chamber (2) in the axial direction thereof, of which one of the pistons clears an outlet opening (6) during a return movement for discharging the compressed bones from the pressure chamber (2), and one of the pistons (4, 5) is provided with a scraping edge (26) for the penetration openings (18), characterised in that the two pistons (4, 5) have blunt end faces (29, 42) whose dimensions, measured in the radial direction of the pressure chamber (2), are smaller than those of the pressure chamber (2), so that each end face (29, 42) is separated from the wall of the pressure chamber (2) by an annular gap, and in that at least one scraping edge (26) of the pressing piston (4) and/or of the counter piston (5) skims over the penetration openings (18) which are of substantially circular cross-section and form a perforated filter (9, 10).

2. An apparatus according to Claim 1, characterised in that the two pistons (4, 5) have slightly cambered end faces (29, 42).

3. An apparatus according to Claim 1 or 2, characterised in that the stroke of at least one piston (4, 5) provided with a scraping edge (26) extends over all the penetration openings (19) of the perforated filter (9, 10).

4. An apparatus according to Claim 1, 2 or 3, characterised in that the strokes of the two pistons (4, 5) overlap at least in the region of the perforated filter (9, 10).

5. An apparatus according to one of Claims 1 to 4, characterised in that the end face (42) of the counter piston (5) is supported by a detachable extension (33).

6. An apparatus according to one of Claims 1 to 5, characterised in that the blunt end face (29) of the pressing piston (4) is supported by a detachable lengthening piece (23).

7. An apparatus according to one of Claims 1 to 6, characterised in that at least one scraping edge (26) is formed by a sleeve (25, 27, 39) preferably composed of plastics material which projects radially beyond the end face (29 or 42) of the piston (4, 5).

8. An apparatus according to one of Claims 1 to 7, characterised in that at least one perforated filter (9, 10) consists of a thin-walled jacket (16) which is penetrated by penetration openings (18) designed as round perforations arranged with their axes in several circles which are mutually displaced in the direction of the perforated filter axis, each circle lying concentrically to the perforated filter axis (19), an encircling reinforcing rib (20) being arranged between each two of these circles on the outer surface of the jacket (16).

9. An apparatus according to Claim 8, characterised in that the perforated filter (9, 10) is formed in one piece.

**Revendications**

1. Dispositif pour enlever la viande des os, en particulier des volailles ou des morceaux de volaille telles que poules ou dindes, ou morceaux de poules ou de dindes par compression de la masse d'os et de viande introduite dans la chambre de compression cylindrique (2) d'une presse entre un piston de compression (4) et un contre-piston (5), des orifices de passage (18) étant prévus dans la paroi de la chambre de compression (2) et permettant le passage de la viande amenée à l'état pâteux par la pression de compression tandis que les os sont retenus, les deux pistons (4, 5) ayant des sections cylindriques et pouvant se déplacer dans la chambre de compression (2) dans le sens axial, l'un des pistons dégageant un orifice d'extraction (6) pour l'évacuation des os comprimés de la chambre de compression (2) au cours de son mouvement de retrait et l'un des pistons (4, 5) étant pourvu d'une arête de grattage (26) pour les orifices de passage (18), caractérisé en ce que les deux pistons (4, 5) présentent des surfaces frontales obtuses (29, 42) dont les dimensions, mesurées dans le sens radial de la chambre de compression (2), sont plus faibles que celles de la chambre de compression (2), si bien que chaque surface frontale (29, 42) est séparée de la paroi de la chambre de compression (2) par un jeu annulaire et qu'au moins une arête de grattage (26) du piston de compression (4) et/ou du contre-piston (5) vient frotter sur les orifices de passage (18) formant un filtre à trous (9, 10) et de section essentiellement circulaire.

2. Dispositif selon la revendication 1, caractérisé en ce que les deux pistons (4, 5) présentent des surfaces frontales (29, 42) légèrement bombées.

3. Dispositif selon la revendication 1 ou 2, caractérisé en ce que la course d'au moins l'un des pistons (4, 5) pourvu d'une arête de grattage (26) s'étend par-dessus l'ensemble des orifices de passage (19) du filtre à trous (9, 10).

4. Dispositif selon la revendication 1, 2 ou 3, caractérisé en ce que les courses des deux pistons (4, 5) se chevauchent au moins dans la zone du filtre à trous (9, 10).

5. Dispositif selon l'une des revendications 1 à 4, caractérisé en ce que la surface frontale (42) du contre-piston (5) est supportée par une allonge démontable (33).

6. Dispositif selon l'une des revendications 1 à 5, caractérisé en ce que la surface frontale obtuse (29) du piston de compression (4) est supportée par une pièce d'allonge démontable (23).

7. Dispositif selon l'une des revendications 1 à 6, caractérisé en ce qu'au moins une arête de grattage (26) est formée par une douille (25, 27, 39), de préférence en matière plastique, faisant saillie radialement par-dessus la surface frontale (29) ou (42) du piston (4, 5).

8. Dispositif selon l'une des revendications 1 à 7, caractérisé en ce qu'au moins un filtre à trous (9, 10) est constitué d'une enveloppe cylindrique à paroi mince (16) qui est percée par des orifices de passage (18) en forme de trous ronds qui sont disposés en plusieurs cercles décalés l'un par rapport à l'autre en direction de l'axe du filtre à trous, et dont chacun est concentrique par rapport à l'axe du filtre à trous (19), tandis qu'une nervure de renforcement (20) périphérique est disposée entre deux cercles de ce genre sur la surface extérieure de l'enveloppe (16).

9. Dispositif selon la revendication 8, caractérisé en ce que le filtre à trous (9, 10) est réalisé en une pièce.

FIG.2

FIG.1

0 127 610

## FIG.3

## FIG.4

## FIG.5

2